# EUROPEAN PATENT APPLICATION

(11) **EP 2 058 156 A1**
(43) Date of publication of application: **13.05.2009**
(21) Application number: 08168493.8
(22) Date of filing: 06.11.2008
(51) Int. Cl.: B60H 1/00, F28F 9/00

(54) **Sealing system for a heat exchanger assembly**

(30) Priority: 08.11.2007 US 2315 P
(71) Applicant: Delphi Technologies, Inc., Troy, Michigan 48007 (US)
(72) Inventor: Coyle, Brian J., Orchard Park, NY 14129 (US); Leitch, Frank J., North Tonawanda, NY 14120 (US); Lipa, Scott B., Snyder, NY 14226 (US)
(74) Representative: Denton, Michael John

(57) **Abstract**

A sealing system for sealing a heat exchanger (20) assembly to an HVAC module (22). A plurality of male connecting members (44) is disposed on one of the outer periphery of the heat exchanger (20) and the interior surface (24) of the channel of the HVAC module (22). A plurality of female connecting members (46) is disposed on the other of the outer periphery of the heat exchanger (20) and the interior surface (24) of the channel of the HVAC module (22). The male connecting members (44) engage the female connecting members (46) to support the heat exchanger (20) and to seal (48) the heat exchanger (20) to the HVAC module (22) to restrict the flow of air from circumventing the heat exchanger (20). The male and female connecting members (44, 46) are tuned to give the heat exchanger (20) a natural frequency in the range of 20 and 100 Hz for dampening vibrations between the heat exchanger (20) and the HVAC module (22).

## Description

### TECHNICAL FIELD

A sealing system for sealing a heat exchanger assembly to an HVAC module.

### BACKGROUND OF THE INVENTION

Heat exchangers are used in automotive systems to either add heat to a flow of air to warm the cabin of a vehicle or to remove heat from the flow of air to cool the cabin. Generally, the heat exchanger is manufactured separately from the vehicle and inserted into the vehicle's HVAC module during the assembly process. The heat exchanger must then be sealed to the HVAC module to restrict air from circumventing the heat exchanger.

One sealing system is disclosed in US Patent No. 5,219,017, issued to Halstead et al. (hereinafter referred to as Halstead '017). The sealing system of the Halstead '017 patent includes an HVAC module having an interior surface to define a channel for air to flow therethrough. A heat exchanger having an outer periphery is disposed in the channel of the HVAC module. The outer periphery of the heat exchanger defines a connector for supporting the heat exchanger in the channel of the HVAC module to restrict the flow of air from circumventing the heat exchanger.

Although the Halstead'017 system restricts a portion of the flow of air from circumventing the heat exchanger, there is still a need to add additional seals to further restrict the flow of air after the heat exchanger is inserted into the HVAC module.

### SUMMARY OF THE INVENTION

The invention provides for such a sealing system and wherein the connector is tuned to give the heat exchanger a natural frequency in the range of 20 Hz and 100 Hz for dampening vibrations between the heat exchanger and the HVAC module.

The invention provides for a system that is easier and cheaper to install in the HVAC module of a vehicle than the prior art systems because it locates, secures, locks and seals the heat exchanger to the HVAC module without any additional pieces or manufacturing steps. Further, it can be used with a wide variety of heat exchanger designs, preferably those that have continuously extruded manifolds. It is impervious to air, and decreases the amount of labor required to install the heat exchanger into the HVAC module because seals do not have to be added after the heat exchanger is inserted into the HVAC module to adequately restrict the flow of air from circumventing the heat exchanger. The system also is quieter than the prior art systems by dampening vibrations between the HVAC module and the heat exchanger by substantially reducing the chance that the heat exchanger reaches resonance while the vehicle is in operation. Lastly, it provides for a tighter package that can fit within the constraints on the vehicle.

### BRIEF DESCRIPTION OF THE DRAWINGS

Other advantages of the present invention will be readily appreciated, as the same becomes better understood by reference to the following detailed description when considered in connection with the accompanying drawings wherein:

Figure 1 is a perspective view of a first embodiment of the subject invention;

Figure 2 is a cross-sectional view of the first embodiment of the subj ect invention;

Figure 3 is a front view of the first embodiment of the subject invention;

Figure 4 is a cross-sectional view of a second embodiment of the subj ect invention;

Figure 5 is a cross-sectional view of a third embodiment of the subject invention;

Figure 6 is a cross-sectional and exploded view of a fourth embodiment of the subject invention; and

Figure 7 is a cross-sectional view of a fifth embodiment of the heat exchanger and the male connecting members.

### DESCRIPTION OF THE PREFERRED EMBODIMENTS

Referring to the Figures, wherein like numerals indicate corresponding parts throughout the several views, the invention is a sealing system for a heat exchanger **20** assembly in an HVAC module **22.**

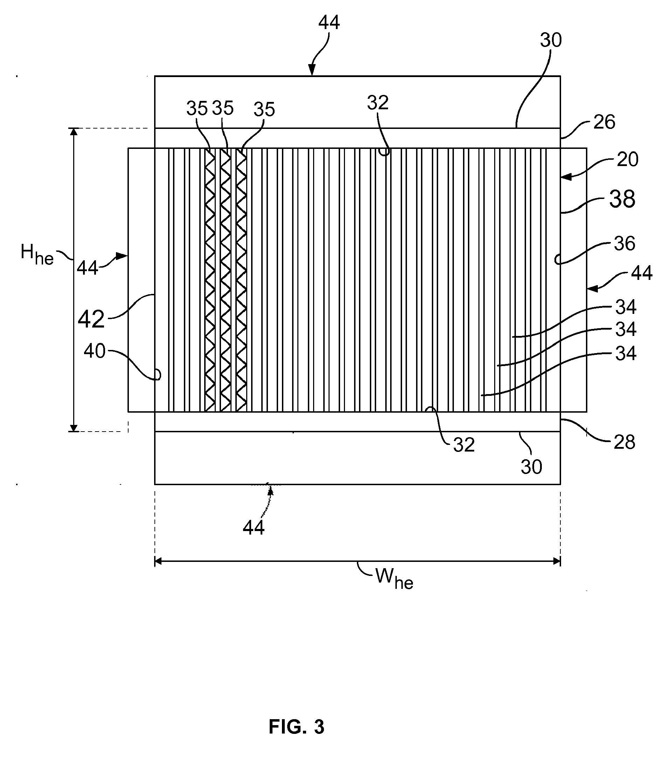

As shown in Figure 3, the HVAC module **22**, generally indicated, has an interior surface **24** with a rectangular periphery to define a channel for air to flow therethrough, and the rectangular periphery has a module width **Wₘ** and a module height **Hₘ.**

A heat exchanger **20,** generally indicated, is disposed in the rectangular channel. The heat exchanger **20** has a first manifold **26** and a second manifold **28** extending in spaced and parallel relationship to one another, and each of the first and second manifolds **26**, **28** has a heat exchanger width **Wₕₑ.** Each of the first and second manifolds **26, 28** defines an outer manifold surface **30** and an inner manifold surface **32.** The outer manifold surfaces **30** face opposite of one another to define a heat exchanger height **Hₕₑ** being the distance between the outer manifold surfaces **30**. The inner manifold surfaces **32** face towards each other.

The heat exchanger width **Wₕₑ** is less than the module width **Wₘ,** and the heat exchanger height **Hₕₑ** is less than the module height **Hₘ** for the heat exchanger **20** to fit into the channel of the HVAC module **22.**

A plurality of tubes **34** extend in spaced and parallel relationship to one another transversely between the inner manifold surfaces **32** of the first and second manifolds **26, 28** of the heat exchanger **20** for establishing fluid communication between the first and second manifolds **26, 28.** Each of the tubes **34** has a cross-section presenting flat sides interconnected by a round front and a round back. A plurality of air fins **35** are disposed between adjacent tubes **34** for transferring heat from the tubes **34** to the flow of air.

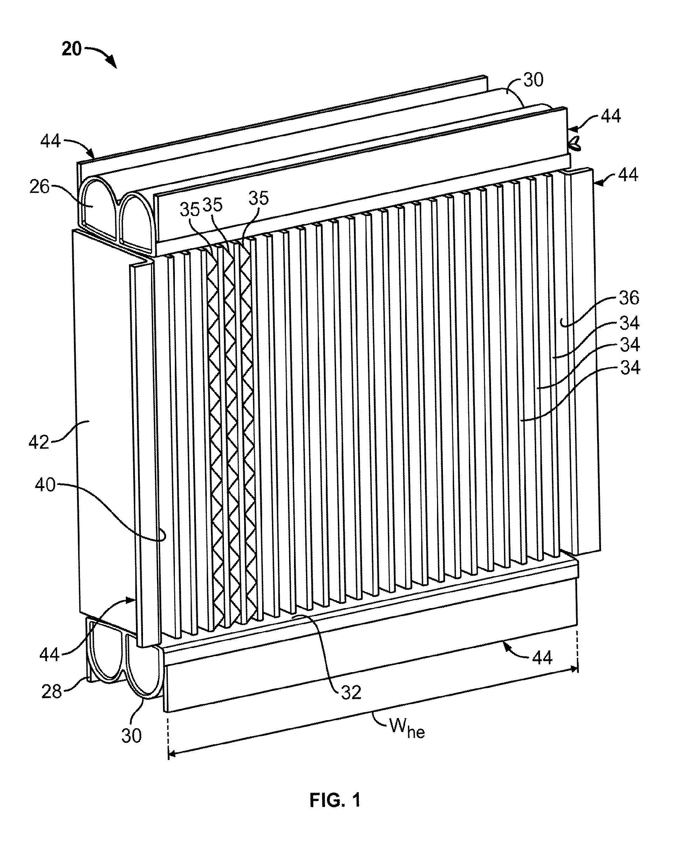

As best shown in Figure 1, the plurality of tubes **34** includes a first tube **36** disposed on one side of the heat exchanger **20** and having a first outer tube surface **38** and a last tube **40** disposed on the other side of the heat exchanger **20** and having a last outer tube surface **42**.

The opposing outer manifold surfaces **30** of the first and second manifolds **26, 28** and the first and last outer tube surfaces **38, 42** of the heat exchanger **20** combine to define an outer periphery having a rectangular shape to complement the rectangular shape of the interior surface **24** of the channel of the HVAC module **22.**

One of the outer periphery of the heat exchanger **20** and the interior surface **24** of the channel of the HVAC module **22** defines a connector **44, 46** extending toward the other of the outer periphery of the heat exchanger **20** and the interior surface **24** of the channel of the HVAC module **22** for supporting the heat exchanger **20** in the channel of the HVAC module **22** and for sealing the heat exchanger **20** to the channel of the HVAC module **22** to restrict the flow of air from circumventing the heat exchanger **20**. The connector **44, 46** is tuned to give the heat exchanger **20** a natural frequency of between **20** and **100** Hz for dampening vibrations between the heat exchanger **20** and the HVAC module **22.** More preferably, the connector **44, 46** is tuned to give the heat exchanger **20** a natural frequency of between 45 and 70 Hz, and most preferably, the connector **44, 46** is tuned to give the heat exchanger **20** a natural frequency of between **65** and **70** Hz. The connector **44, 46** may be tuned in a number of ways, e.g. adjusting the material, size, and/or shape of the connector **44, 46.** In the exemplary embodiments, the connector **44, 46** includes a plurality of male connecting members **44** and a plurality of female connecting members 46 engaging the male connecting members **44**. However, the connector **44, 46** could be any other means of supporting the heat exchanger **20** in the HVAC module **22**.

In the exemplary embodiments, the male connecting members **44** are disposed on one of the outer periphery of the heat exchanger **20** and the interior surface **24** of the channel of the HVAC module **22** and extend toward the other of the outer periphery of the heat exchanger **20** and the interior surface **24** of the channel of the HVAC module **22.** The other of the outer periphery of the heat exchanger **20** and the channel of the HVAC module **22** defines a plurality of female connecting members **46,** generally indicated, engaging the male connecting members **44** for supporting the heat exchanger **20** in the channel of the HVAC module **22** and for sealing the heat exchanger **20** to the channel of the HVAC module **22** to restrict the flow of air from circumventing the heat exchanger **20.**

Preferably, one or both of the male and female connecting members **44, 46** is made of a resilient material, e.g. rubber. The material could be moldable and/or extrudable and is typically made of a polymer and an overmolded elastomer. The resilient material acts to seal **48** the heat exchanger **20** to the HVAC module **22** and to dampen vibrations between the heat exchanger **20** and the HVAC module **22** to protect the heat exchanger **20** and to reduce the noise and vibration transmission.

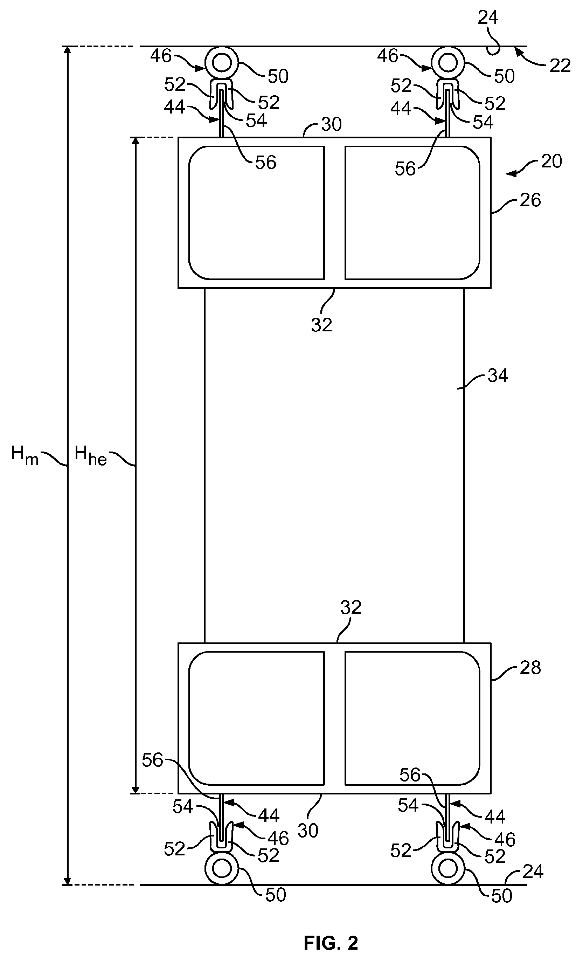

Figures 1 and 2 show a first embodiment of the subject invention. In the first embodiment, the male connecting members **44** are disposed on the outer periphery of the heat exchanger **20** and the female connecting members **46** are disposed on the interior surface **24** of the HVAC module **22**. Each of the female connecting members **46** includes an isolating member **50** having a tubular shape. The isolating member **50** is preferably of rubber for receiving and damping vibrations between the heat exchanger **20** and the HVAC module **22**. A pair of fingers **52** extending outwardly from the tubular isolating member **50** in spaced and parallel relationship to one another to present a groove **54** therebetween. Each of the male connecting members **44** disposed on the outer periphery of the heat exchanger **20** is a flange **56** extending outwardly from the heat exchanger **20** to engage the groove **54** of the female connecting member **46**.

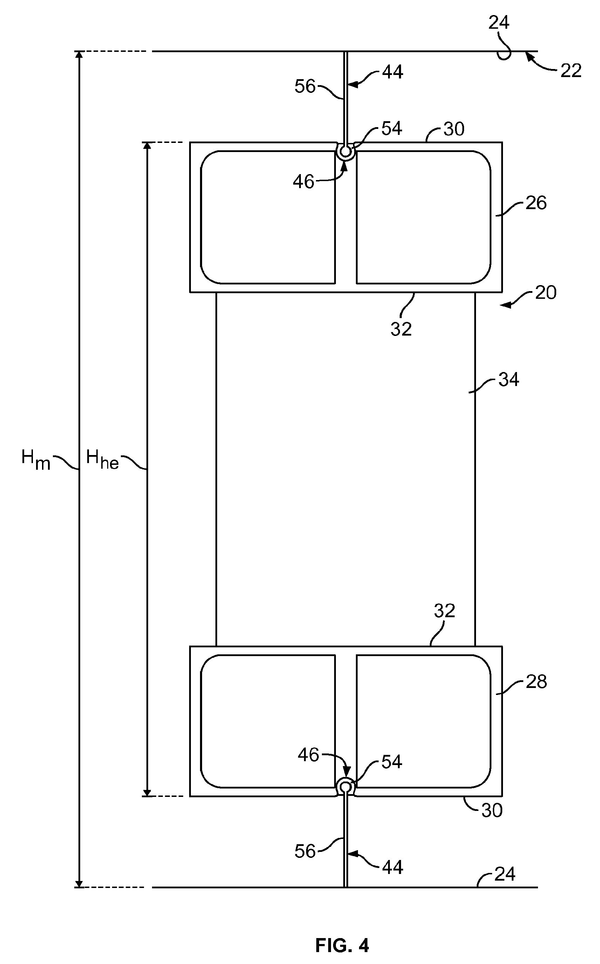

Figure 4 shows a second embodiment of the invention. In the second embodiment, the outer periphery of the heat exchanger **20** presents a groove **54** to define the female connecting member **46**. The male connecting member **44** is a flange 56 disposed on the interior surface **24** of the channel of the HVAC module **22.** The flange **56** extends into and engages the groove **54** of the heat exchanger **20** to support the heat exchanger **20** in the HVAC module **22**. Preferably, the flange **56** is of a resilient material to dampen vibrations between the heat exchanger **20** and the HVAC module **22.**

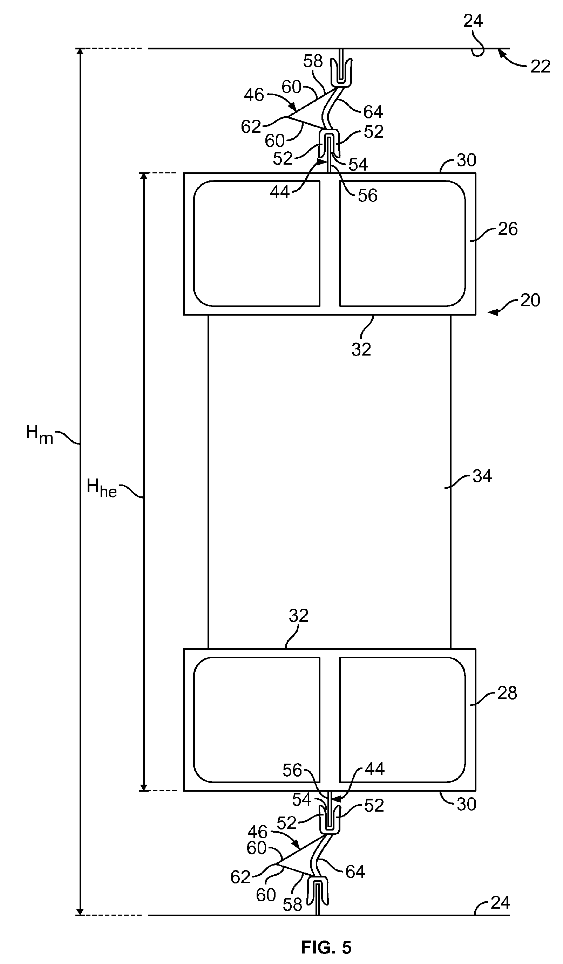

Figure 5 shows a third embodiment of the invention. Each of the female connecting members **46** of the third embodiment is a hinge **58** presenting two legs **60** rotatably connected at a pivot point **62**. One of the legs **60** engages the interior surface **24** of the HVAC module **22** and the other of the legs **60** presents a pair of fingers **52** extending in spaced and parallel relationship to present a groove **54** therebetween. Each of the male connecting members 44 disposed on the outer periphery of the heat exchanger **20** is a flange **56** extending outwardly from the heat exchanger **20** to engage the groove **54** of one of the female connecting members **46**. Each of the female connecting members **46** includes an isolating web **64** extending between the legs **60** of the hinge **58** for dampening vibrations between the heat exchanger **20** and the HVAC module **22**. Preferably, the legs **60** of the hinge **58** are made of polypropylene, or a similar polymeric material, and the isolating web **64** is made of a resilient material, e.g. rubber.

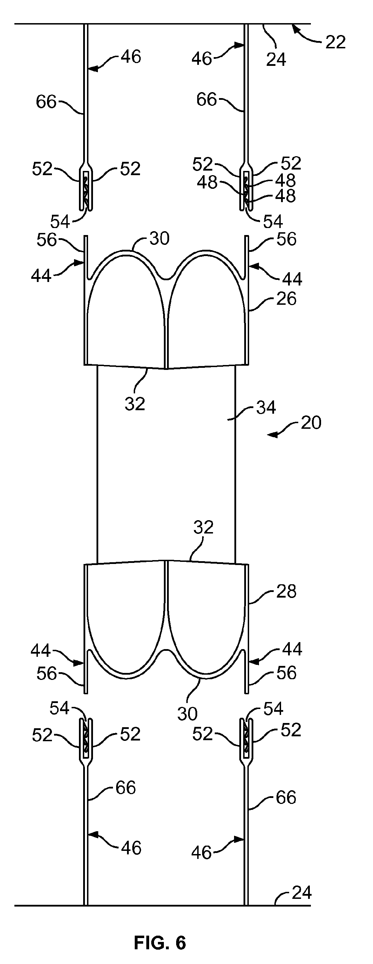

Figure 6 shows a fourth embodiment of the invention. In the fourth embodiment, the male connecting members **44** are disposed on the outer periphery of the heat exchanger **20** and the female connecting members **46** are disposed on the interior surface **24** of the HVAC module **22.** Each of the male connecting members **44** is a flange **56** extending outwardly from the outer periphery of the heat exchanger **20** toward the interior surface **24** of the HVAC module b. Each of the female connecting members **46** is a flexible seal member 66 and extending outwardly to a distal end from the interior surface **24** of the HVAC module **22** toward the flange **56** of the heat exchanger **20** and presents a pair of fingers 52 extending outwardly from the distal end in spaced and parallel relationship to one another and on either side of the flange **56** of the heat exchanger **20.** A plurality of seals **48** are disposed on the fingers **52** and extend into the groove **54** to engage the flange **56** of the male connecting member **44.** Preferably, the flexible seal member **66** is made of a resilient material.

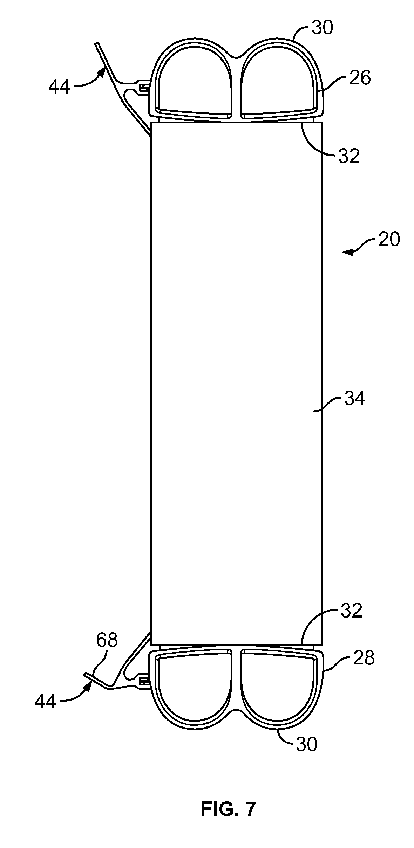

At least one of the male and female connecting members **44, 46** may also define a lip **68** for collecting a condensate from the heat exchanger **20** and draining that condensate. Such a system prevents the buildup of standing water, which could result in bacteria growth, e.g. mold. Figure 7 shows a fifth embodiment of the invention, wherein the male connecting member **44** presents such a lip **68**.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A sealing system for a heat exchanger **(20)** assembly in an HVAC module **(22)** comprising:
an HVAC module **(22)** having an interior surface **(24)** defining a channel for air to flow therethrough;
a heat exchanger **(20)** having an outer periphery disposed in said channel of said HVAC module **(22)**;
one of said outer periphery of said heat exchanger **(20)** and said interior surface **(24)** of said channel of said HVAC module **(22)** defining a connector **(44, 46)** extending toward the other of said outer periphery of said heat exchanger **(20)** and said interior surface **(24)** of said channel of said HVAC module **(22)** for supporting said heat exchanger **(20)** in said channel of said HVAC module **(22)** and for sealing said heat exchanger **(20)** to said channel of said HVAC module **(22)** to restrict the flow of air from circumventing said heat exchanger **(20)**; and
said connector **(44, 46)** being tuned to give said heat exchanger **(20)** a natural frequency in the range of 20 and 100 Hz for dampening vibrations between said heat exchanger **(20)** and said HVAC module **(22)**.

2. The assembly as set forth in claim 1 wherein at least one of said male and female connecting members **(44, 46)** defines a lip **(68)** for catching a condensate from said heat exchanger **(20)**.

3. The assembly as set forth in claim 1 wherein said connector **(44**, **46)** is tuned to give said heat exchanger **(20)** a natural frequency in the range of 45 and 70 Hz for dampening vibrations between said heat exchanger **(20)** and said HVAC module **(22)**.

4. The assembly as set forth in claim 3 wherein said connector **(44, 46)** is tuned to give said heat exchanger **(20)** a natural frequency in the range of 65 and 70 Hz for dampening vibrations between said heat exchanger **(20)** and said HVAC module **(22)**.

5. The assembly as set forth in claim 1 wherein said connector **(44, 46)** is of a resilient material.

6. The assembly as set forth in claim 5 wherein said resilient material of said connector **(44, 46)** is rubber.

7. The assembly as set forth in claim 1 wherein said connector **(44, 46)** includes a male connecting member **(44)** disposed on one of the outer periphery of said heat exchanger **(20)**.

8. The assembly as set forth in claim 7 wherein said connector **(44, 46)** includes a female connecting member **(46)** disposed on the other of said outer periphery of said heat exchanger **(20)** and said channel of said HVAC module **(22)** and engaging said male connecting member **(44)** for supporting said heat exchanger **(20)** in said channel of said HVAC module **(22).**

9. The assembly as set forth in claim 8 further comprising a plurality of male connecting members **(44)**.

10. The assembly as set forth in claim 9 further comprising a plurality of female connecting members **(46)**.

11. The assembly as set forth in claim 10 wherein the one of said male and female connecting members **(44, 46)** disposed on said heat exchanger **(20)** extends along the entirety of said outer periphery for sealing said heat exchanger (20) to said channel of said HVAC module **(22)** to restrict the flow of air from circumventing said heat exchanger **(20)**.

12. The assembly as set forth in claim 10 wherein each of said male connecting members **(44)** is disposed on said outer periphery of said heat exchanger **(20)** and each of said female connecting members **(46)** is disposed on said interior surface **(24)** of said HVAC module **(22).**

13. The assembly as set forth in claim 12 wherein each of said female connecting members **(46)** includes an isolating member **(50)** being of a resilient material for receiving and damping vibrations between said heat exchanger **(20)** and said HVAC module **(22).**

14. The assembly as set forth in claim 13 wherein said isolating member **(50)** has a tubular shape.

15. The assembly as set forth in claim 14 wherein each of said female connecting members **(46)** further includes a pair of fingers **(52)** extending outwardly from said isolating member **(50)** in spaced and parallel relationship to one another to present a groove **(54)** therebetween.
